# EUROPEAN PATENT APPLICATION

(11) **EP 4 207 788 A1**
(43) Date of publication of application: **05.07.2023**
(21) Application number: 20951624.4
(22) Date of filing: 25.08.2020
(51) Int. Cl.: H04N 21/4725, H04N 21/858, H04N 21/438, H04N 21/431, H04N 21/482

(54) **DISPLAY DEVICE AND METHOD FOR PROVIDING CONTENT USING SAME**

(71) Applicant: LG Electronics Inc., Yeongdeungpo-gu Seoul, 07336 (KR)
(72) Inventor: LEE, Sangseok, Seoul 06772 (KR); LEE, Jaekyung, Seoul 06772 (KR)
(74) Representative: Schornack, Oliver
(86) International application number: PCT/KR2020/011349
(87) International publication number: WO 2022/045391

(57) **Abstract**

The present disclosure provides a display device comprising a processor configured to: receive EPG channel map information including a plurality of channel numbers and information on content providers corresponding to the plurality of channel numbers; receive URL information that is a web content providing address of each of the plurality channel numbers included in the EPG channel map information through a communication interface; acquire IP channel information that is a media content providing address of each of the plurality of channel numbers; generate integrated channel information according to the presence or absence of an IP channel of each of the plurality of channel numbers on the basis of the EPG channel map information, the URL information, and the IP channel information to generate integrated channel map information including the integrated channel information; and receive a predetermined channel number through a user input interface unit and output, through a display unit, media content or web content provided from the predetermined channel number.

## Description

### Technical Field

The present disclosure relates to a display device. More specifically, the present disclosure relates to a display device, capable of providing content through various passages by using an integral channel map, and a method for providing content using the same.

### Background Art

Conventionally, a broadcasting station supplies content by transmitting a broadcasting signal, and a consumer watches the content by receiving the broadcasting signal.

In addition, recently, a system for providing a digital television service to the consumer by using an Internet protocol through a broadband network connection has been developed.

In addition, recently, as the media environment has changed rapidly, content providers have supplied content to the consumer through various channels, by performing an on-air live streaming broadcasting on their websites

Therefore, there is an increasing need for integrated viewing and management of contents provided on various distribution networks in aspect of content viewers.

### Disclosure

### Technical Problem

The present disclosure is to provide a display device capable of generating an integral channel map by integrating an Internet protocol (IP) channel provided for each content supplier and a live web channel.

The present disclosure is to provide a display device capable of conveniently switching between content provided through an IP channel and content provided through the website.

The present disclosure is to provide a display device capable of viewing various pieces of content by receiving content through another channel, even when the content is received and recorded through a tuner.

The present disclosure is to provide a display device capable of changing a channel number without a delay by loading a web-page of a content provider of a channel to be changed in the channel number in advance to prepare for the input of changing the channel number.

The present disclosure is to provide a display device capable of providing a broadcast, which is on streaming over a website of a content provider, by automatically switching the screen of the broadcast to a whole screen.

### Technical Solution

According to an embodiment of the present disclosure, a display device includes a communication interface to receive Electronic Program Guide (EPG) channel map information including information on a plurality of channel numbers and including information on a content provider corresponding to the plurality of channel numbers, and to receive information on a Uniform Resource Locator (URL) serving as a web-content providing address of each of the plurality of channel numbers, which is included in the EPG channel map information; and a processor to acquire Internet protocol (IP) cannel information indicating a media content providing address of each of the plurality of channel numbers; generate integral channel map information including integral channel information by generating the integral channel information, depending on whether an IP channel is present for each of the plurality of channel numbers, based on the EPG channel map information, the URL information, and the IP channel information; receive an input of a specific channel number through a user input unit; and output, through a display unit, media content or web content provided with respect to the specific channel number.

According to an embodiment of the present disclosure, the display device includes the processor to determine whether a present channel includes URL information, based on the integral channel map information, when the present channel outputs media content provided through the IP channel; and output, through the display unit, a switching button for outputting web content of the channel, when the present channel includes URL information.

According to an embodiment of the present disclosure, the display device includes the processor to determine whether a present channel includes URL information, based on the integral channel map information, when the present channel outputs web content provided in the form of URL information, and output, through the display unit, a switching button for switching the present channel to the IP channel, when the present channel provides media content through the IP channel.

According to an embodiment of the present disclosure, the display device includes the processor to receive a content search command through a user input unit, output, through the display unit, at least one content which is found in response to the content search command, acquire, from the integral channel information, URL information corresponding to a channel of a content provider of the found content, and output a channel switching button for outputting web content of the channel of the content provider of the found content.

According to an embodiment of the present disclosure, the display device includes the processor to output, through the display unit, a plurality of contents to a plurality of divided screens, respectively, output media content of a first content provider, which is provided through the IP channel, on a first divided screen of the plurality of divided screens, and output web content of a second content provider on a second divided screen of the plurality of divided screens.

According to an embodiment of the present disclosure, the display device includes the processor to output a simultaneous viewing button for controlling to output second media content, which is provided by the second content provider on the first divided screen, through the display unit.

According to an embodiment of the present disclosure, the display device includes the processor to receive an input of a channel number change command through the user input unit, determine wherein a present channel is being recorded, acquire URL information of a channel number, which is to be changed, from the integral channel map information, when the present channel is being recorded, and output, to the display unit, web content provided through the channel number to be changed, based on the URL information of the channel number to be changed.

According to an embodiment of the present disclosure, the display device includes the processor to acquire information on a channel adjacent to a present channel, from the integral channel map information, acquire URL information of the adjacent channel from the integral channel map information, based on the information on the adjacent channel, store, a memory, web content provided by the adjacent channel by receiving the web content provided by the adjacent channel based on the acquired URL information through the communication interface, receive a command for changing a channel number to the adjacent channel through the user input unit, and output, through the display unit, the web content of the adjacent channel, which is stored in the memory, in response to the channel number change command.

According to an embodiment of the present disclosure, the display device includes the processor to input an image of the web content of the adjacent channel to a button recognition model, acquire button area information output from the button recognition model, and output web streaming content, which is provide in the web content, on a full screen, based on the button area information.

According to an embodiment of the present disclosure, a method for providing content includes receiving Electronic Program Guide (EPG) channel map information including information on a plurality of channel numbers and including information on a content provider corresponding to the plurality of channel numbers, receiving information on a Uniform Resource Locator (URL) serving as a web-content providing address of each of the plurality of channel numbers, which is included in the EPG channel map information, acquiring Internet protocol (IP) cannel information indicating a media content providing address of each of the plurality of channel numbers, generating integral channel map information including integral channel information by generating the integral channel information, depending on whether an IP channel is present for each of the plurality of channel numbers, based on the EPG channel map information, the URL information, and the IP channel information, receiving a specific channel number through a user input unit; and outputting, through a display unit, media content or web content provided with respect to the specific channel number

According to an embodiment of the present disclosure, a method for providing content includes determining whether a present channel includes URL information, based on the integral channel map information, when the present channel outputs media content provided through the IP channel, and outputting a switching button for outputting web content of the channel, when the present channel includes URL information.

According to an embodiment of the present disclosure, a method for providing content includes receiving a content search command, outputting at least one content which is found in response to the content search command, acquiring, from the integral channel information, URL information corresponding to a channel of a content provider of the found content, and outputting a channel switching button for outputting web content of the channel of the content provider of the found content.

According to an embodiment of the present disclosure, a method for providing content includes the outputting of the media content or the web content includes outputting media content of a first content provider, which is provided through the IP channel, on a first divided screen of the plurality of divided screens, outputting web content of a second content provider on a second divided screen of the plurality of divided screens, and outputting, on the second divided screen, a simultaneous viewing button to output second media content, which is provided by the second content provider on the first divided screen.

According to an embodiment of the present disclosure, a method for providing content includes receiving an input of a channel number change command, determining wherein a present channel is being recorded, acquiring URL information of a channel number, which is to be changed, from the integral channel map information, when the present channel is being recorded, and outputting web content provided through the channel number to be changed, based on the URL information of the channel number to be changed.

According to an embodiment of the present disclosure, a method for providing content includes acquiring information on a channel adjacent to a present channel, from the integral channel map information, acquiring URL information of the adjacent channel from the integral channel map information, based on the information on the adjacent channel, storing web content provided by the adjacent channel by receiving the web content provided by the adjacent channel based on the acquired URL information, receiving a command for changing a channel number to the adjacent channel, and outputting the web content of the adjacent channel, which is stored, in response to the channel number change command.

According to an embodiment of the present disclosure, a method for providing content includes inputting an image of the web content of the adjacent channel to a button recognition model, acquiring button area information output from the button recognition model, and outputting web streaming content, which is provide in the web content, on a full screen, based on the button area information.

### Advantageous Effects

According to an embodiment of the present disclosure, the integral channel map may be generated by integrating an Internet protocol (IP) channel provided for each content supplier and a live streaming channel map.

According to an embodiment of the present disclosure, the content provided through the airwaves or the IP channel may be conveniently switched together with content provided through the website.

According to an embodiment of the present disclosure, even when content is received and recorded through the tuner, various pieces of content may be viewed by receiving content through another channel.

According to an embodiment of the present disclosure, the channel number may be changed without the delay by loading the web-page of the content provider of the channel to be changed in the channel number in advance to prepare for the input of changing the channel number.

According to an embodiment of the present disclosure, the broadcast, which is on streaming over the website of the content provider, may be provided by automatically switching the screen of the broadcast on the full screen.

### Description of Drawings

FIG. 1 is a block diagram illustrating a configuration of a display device according to an embodiment of the present disclosure.
FIG. 2 is a block diagram of a remote control device according to an embodiment of the present disclosure.
FIG. 3 is a view illustrating the configuration of a remote control device according to an embodiment of the present disclosure.
FIG. 4 is a view using a remote control device according to an embodiment of the present disclosure.
FIG. 5 is a flowchart illustrating a method of generating an integral channel map according to an embodiment of the present disclosure.
FIG. 6 is a view illustrating an integral channel map according to an embodiment of the present disclosure.
FIG. 7 is a view illustrating channel switching according to an embodiment of the present disclosure.
FIG. 8 is a view illustrating channel switching according to an embodiment of the present disclosure.
FIG. 9 is a flowchart illustrating a method of providing multi-channel content according to an embodiment of the present disclosure.
FIG. 10 is a view illustrating a screen for providing multi-channel content according to an embodiment of the present disclosure.
FIG. 11 is a flowchart illustrating a method for recording content according to an embodiment of the present disclosure.
FIG. 12 is a flowchart illustrating a method of changing a channel number according to an embodiment of the present disclosure.
FIG. 13 is a flowchart illustrating a method of outputting web streaming content on a full screen according to an embodiment of the present disclosure.
FIG. 14 is a view illustrating a button recognizing model according to an embodiment of the present disclosure.
FIG. 15 is a view illustrating that web streaming content is output on a full screen according to an embodiment of the present disclosure.

### Best Mode

### Mode for Invention

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

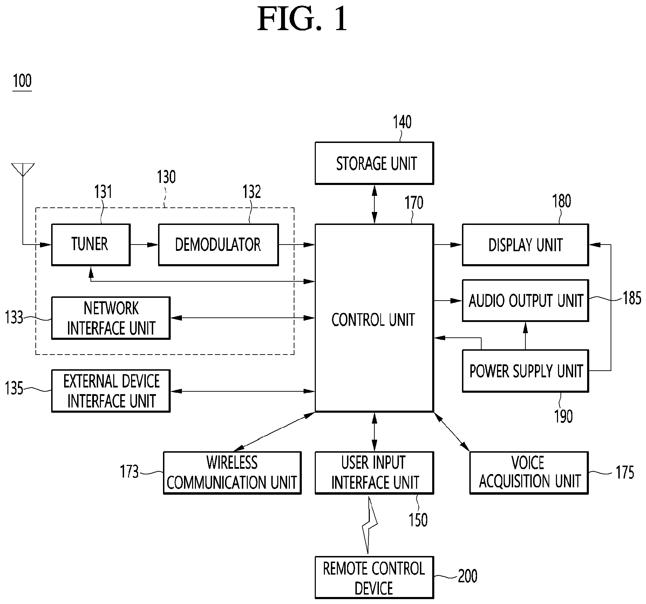

Fig. 1 is a block diagram illustrating a configuration of a display device according to an embodiment of the present disclosure.

Referring to FIG. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audios outputted from an external device that is wirelessly or weirdly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theatre system but this is just exemplary.

Additionally, some content data stored in the display device 100 may be transmitted to a user or an electronic device, which is selected from other users or other electronic devices pre-registered in the display device 100.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra-Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100. Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The voice acquisition unit 175 may acquire audio. The voice acquisition unit 175 may include at least one microphone (not shown) and may acquire audio around the display device 100 through the microphone (not shown).

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display devices described with reference to Fig. 1, an image processing device such as the separated set-top box, and a content playback device including the display unit 180 and the audio output unit 185.

The audio output unit 185 receives the audio-processed signal from the control unit 170 to output an audio signal.

The power supply unit 190 supplies the corresponding power to the entire display device 100. Particularly, power may be supplied to the control unit 170 that is capable of being implemented in the form of a system on chip (SOC), the display unit 180 for displaying an image, the audio output unit 185 for outputting audio, and the like.

Specifically, the power supply unit 190 may include a converter that converts AC power to DC power and a DC/DC converter that converts a level of the DC power.

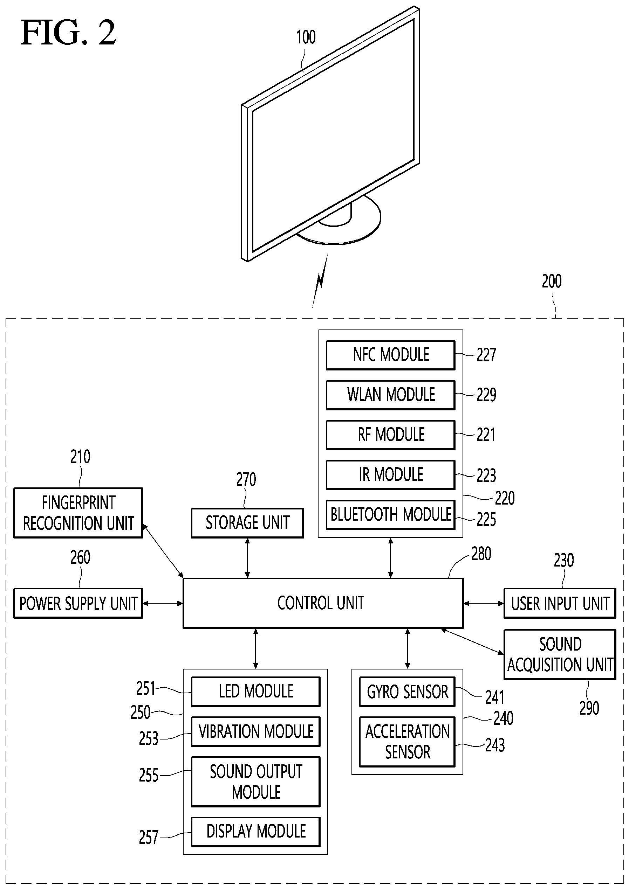

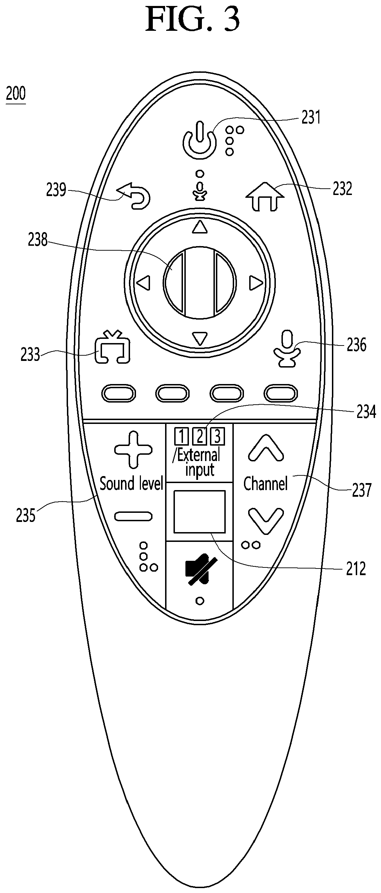

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100. A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced. The power supply unit 260 may resume the supply of power if a predetermined key provided at the remote control device 200 is operated.

The storage unit 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may include at least one microphone and acquire voice through the microphone.

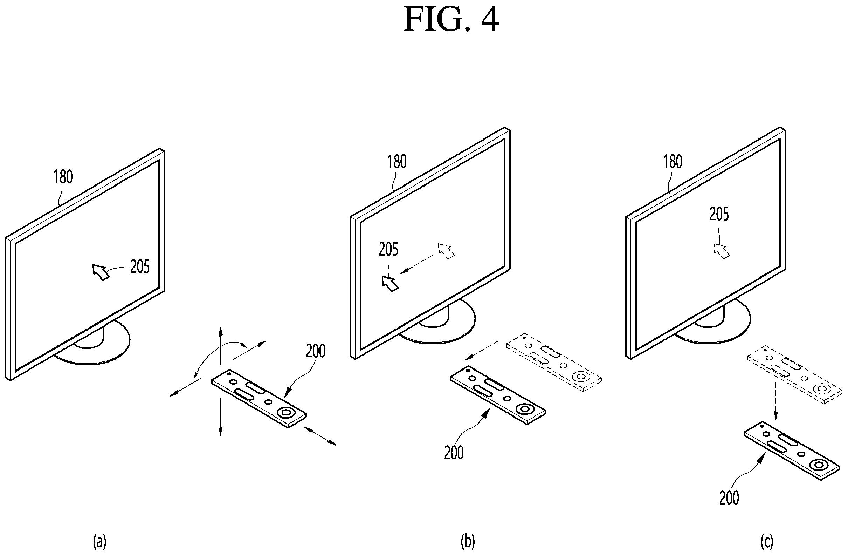

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

Meanwhile, the control unit 170 may also be referred to as a processor 170. In addition, the storage unit 140 may be referred to as a memory 140. In addition, the wireless communication unit 173 may be referred to as a communication interface 173.

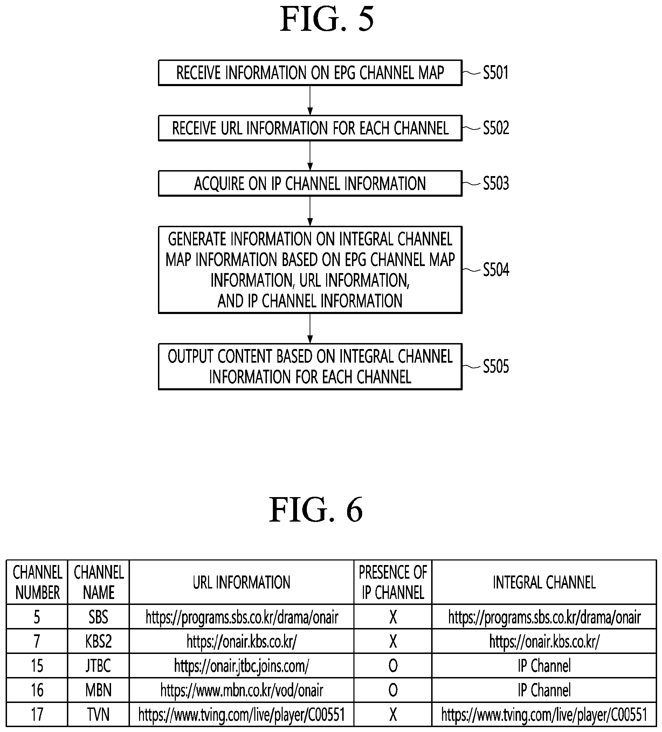

FIG. 5 is a flowchart illustrating a method of generating an integral channel map according to an embodiment of the present disclosure.

The display device 100 may receive information on an EPG channel map through the wireless communication unit 173 (S501). In addition, the processor 170 may store the received information on the EPG channel map in the memory 140.

The information on the electronic program guide (EPG) channel map may refer to information an electronic program guide channel map.

The information on the EPG channel map may include information on a plurality of channel numbers and content providers corresponding to the plurality of channel numbers. The information on the content provider may mean a channel name.

For example, referring to FIG. 6, information on the EPG channel map may include '5', '7', '15', '16', and '17' which is information on the plurality of channel numbers, and may include information on a channel name, such as 'SBS', 'KBS2', 'JTBC', 'MBN', and 'TVN', each of the plurality of channel numbers.

Information on the EPG channel map is not limited to information on a channel number and the information on the channel name, and may include broadcast information, such as a channel code, to distinguish between channels.

Meanwhile, the processor 170 may receive URL information for each channel through the wireless communication unit 173 (S502).

The processor 170 may receive URL information corresponding to each channel included in information on the EPG channel map through the wireless communication unit 173.

The processor 170 may receive URL information, which is a web content providing address of each of a plurality of channel numbers included in information on the EPG channel map, through the wireless communication unit 173.

The URL information may be information on an address for accessing web content provided by a content provider of each channel. The web content may include a website operated by the content provider, web streaming content, content information, and communication information of viewers for the content.

For example, the URL information may be address information of a web page in which a content provider of each channel is transmitting web content in the form of Internet live streaming through wireless communication unit 173.

FIG. 6 is a view illustrating an integral channel map according to an embodiment of the present disclosure.

Referring to FIG. 6, the processor 170 may receive URL information operated by a content provider of each channel corresponding to each channel number and channel name.

The processor 170 may acquire tuner information or IP channel information through the memory 140 or the wireless communication unit 173 (S503).

The tuner information or the IP channel information may be information previously stored in the memory 140 of the display device 100, and the processor 170 may acquire the tuner information or the IP channel information from the memory 140. In addition, the processor 170 may acquire tuner information or IP channel information from an external server (not illustrated) through the wireless communication unit 173.

The tuner information may be information on whether the content provider provides media content by transmitting a broadcasting signal. When the content provider provides media content by transmitting the broadcasting signal, the display device 100 may output media content by receiving the broadcasting signal through the tuner 131.

The IP channel information may be information on whether each channel provides a digital television service, or media content, to a consumer by using an Internet protocol, through a broadband network connection.

The processor 170 may acquire IP channel information which indicates an address for providing media channel of each of a plurality of channel numbers.

The processor 170 may determine whether each of the plurality of channel numbers provides an IP channel from the IP channel information corresponding to each of the plurality of channel numbers.

In addition, referring to FIG. 6, the processor 170 may map whether or not an IP channel is provided for each channel in EPG channel map information and store the same in the memory 140.

Meanwhile, the processor 170 may generate integral channel information based on the information on the EPG channel map, the URL information, and the IP channel map information (S502).

The integral channel information map may be information generated by mapping the information on the EPG channel map, the URL information, and the IP channel information to each channel.

The processor 170 may generate integral channel information, based on whether an IP channel is present for each of the plurality of channel numbers, based on the information on the EPG channel map, the URL information, and the IP channel information.

The processor 170 may store an integral channel as an IP channel when a specific channel number has the IP channel, and may store URL information as the integral channel information, when the specific channel number has no IP channel.

For example, referring to FIG. 6, the processor 170 may store the integral channel information in the form of URL information, when the IP channel is not provided with respect to the channel name "SBS". In addition, when the IP channel is provided with respect to the channel name 'JTBC', the processor 170 may store the integral channel information in the form of the IP channel information.

The processor 170 may generate integral channel map information including the generated integral channel information.

The processor 170 may output content through the display unit 180 based on the integral channel information of each channel.

The processor 170 may receive a specific channel number through the user input unit 150, and output, through the display unit 150, media content or web content, which is provided with respect to the specific channel number, based on the integral channel information of the specific channel number which is received.

For example, when the content of each channel is output, the processor 170 may determine the content to be output depending on whether the IP channel is stored or URL information is stored in the integral channel information.

For example, referring to FIG. 6, when content for channel number '15' needs to be output, the processor 170 may output media content input through the IP channel based on integral channel information. In addition, for example, referring to FIG. 6, when content for channel number '17' needs to be output, the processor 170 may output, through the display unit 180, web content input through an URL, based on integral channel information.

Accordingly, the display device 100 may output the media content or the web content of the content provider, based on the integral channel information of each channel, even if there is no broadcast image or content input through the tuner 131 or the receiving of the media content is failed through the tuner 131.

Meanwhile, when outputting web content through the URL, the processor 170 may output the URL web page itself or provide web streaming content provided on the URL web page on a full screen.

In addition, the display device 100 may output content, which is provided through the IP channel, through the display unit 180, and may switch to output web content through a URL web page when the relevant channel contains URL information.

The processor 170 may output media content through the display unit 180 when a content provider of a specific channel number provides media content through an IP channel based on integral channel map information, when the specific channel number is input through the user input unit.

When the content provider does not provide media content through an IP channel, the processor 170 may output web content through the display unit 180, based on URL information of the content provider.

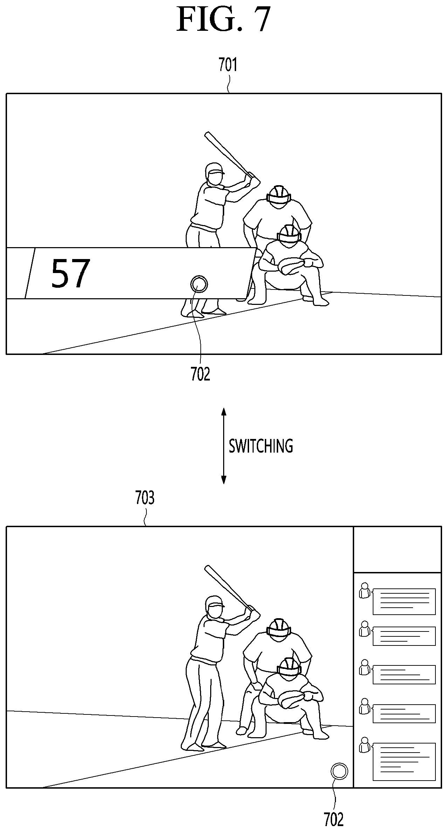

FIG. 7 is a view illustrating channel switching according to an embodiment of the present disclosure.

The display device 100 may output media content 701, which is provided through an IP channel, through the display unit 180.

In addition, the processor 170 may determine whether the channel of the currently output media content includes URL information, based on the integral channel map information.

When the channel of the currently output media content includes URL information, the processor 170 may output a switching button 702, which is for outputting the web content of the relevant channel, through the display unit 180.

The processor 170 may receive an input for a channel switching command by receiving an input for the switching button 702 through the user input unit 150.

When the channel switching command is input, the processor 170 may output web content 703 of the content provider of the relevant channel through the display unit 180. Web streaming content may be provided with respect to web content 703, and conversation content of a viewer watching the corresponding web streaming content may be provided.

In addition, the processor 170 may determine whether the channel of the content 703, which is currently output, provides media content through the IP channel, based on the integral channel map information.

When the channel of the web content, which is currently output, provides media content through the IP channel, the processor 170 may output the switching button 702 which allows the channel to be converted into the IP channel, through the display unit 180.

Accordingly, the display device 100 may determine whether a specific channel provides content through the IP channel and the URL, based on the integral channel map information, and may switch a content providing path.

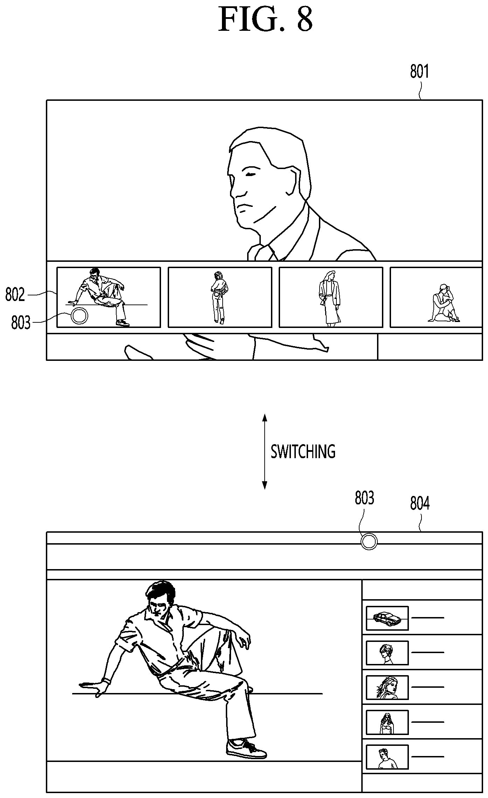

FIG. 8 is a view illustrating channel switching according to an embodiment of the present disclosure.

The processor 170 may receive a content search command through the user input interface 150. The processor 170 may receive a content search command associated with content 801 which is currently output.

The processor 170 may output, through the display unit 180, at least one search content, which is found in response to the received content search command, as at least one search result 802 through the display unit 180.

The processor 170 may determine whether URL information corresponding to the content provider of the found content is present, based on the integral channel map information.

When the channel of the content provider of the found content includes URL information, the processor 170 may acquire URL information corresponding to the channel of the content provider of the searched content, from the integral channel map information.

The processor 170 may output a channel switching button 803 for outputting web content of a corresponding channel, through the display unit 180.

The processor 170 may receive an input for a channel switching command by receiving an input for the switching button 803 through the user input unit 150.

When the channel switching command is input, the processor 170 may output web content 804 of a content provider of the relevant channel through the display unit 180. Web streaming content may be provided with respect to the web content 804, the relevant web content and provided web content information may be included, in addition to the conversations of viewers watching the web streaming content.

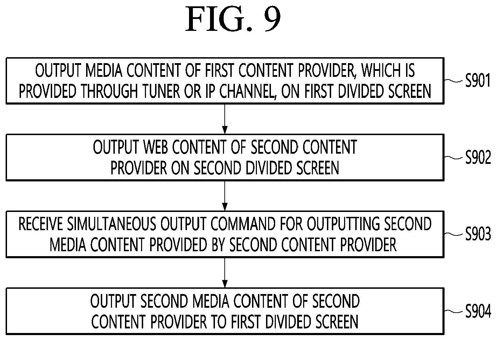

FIG. 9 is a flowchart illustrating a method of providing multi-channel content according to an embodiment of the present disclosure.

The processor 170 may control the display unit 180 to output a plurality of contents to a plurality of divided screens, respectively.

The processor 170 may output media content of a first content provider, which is provided through a tuner or an IP channel, on a first divided screen (S901).

For example, the processor 170 may control a broadcast image of the first content provider, which is input through the tuner 131, to be displayed on the first divided screen. In addition, the processor 170 may control the content of the first content provider input through the IP channel to be displayed on the first divided screen.

In addition, the processor 170 may control to display web content of a second content provider on a second divided screen (S902).

Accordingly, the processor 170 may provide media content of the first content provider on the first divided screen, and provide web content of the second content provider on the second divided screen, such that a user may view various contents on individual screens.

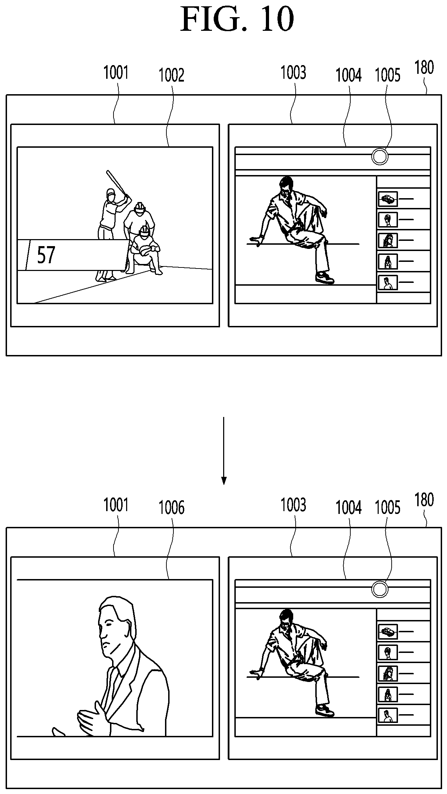

FIG. 10 is a view illustrating a screen for providing multi-channel content according to an embodiment of the present disclosure.

Referring to FIG. 10, the processor 170 may display first media content 1002 of the first content provider, which is provided through a tuner or an IP channel, on the first divided screen 1001 through the display unit 180. In addition, the processor 170 may display web content 1004 of the second content provider, which is provided through the URL channel on the second divided screen 1003, through the display unit 180.

Meanwhile, the processor 170 may output a simultaneous viewing button 1005 for controlling to output the second media content provided by the second content provider on the second divided screen through the display unit 180.

The processor 170 may receive a simultaneous output command by receiving an input for a simultaneous viewing button 1005 for outputting the second media content provided by the second content provider through the user input unit 150 (S903).

When receiving the simultaneous output command, the processor 170 may specify a second content provider based on URL address information providing web content. For example, the second content provider may be specified based on the channel name included in the URL address.

In addition, the processor 170 may output the second media content 1006 of the first content provider on the first divided screen 1001 (S904). Accordingly, the display device 100 may display the media content of the second content provider on the first division screen 1001, in the web content of the second content provider provided on the second division screen 1003.

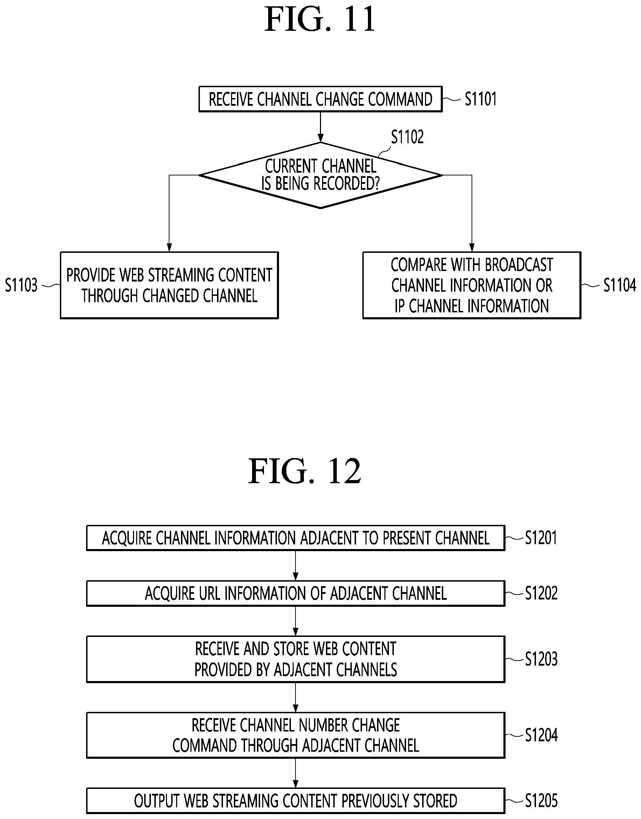

FIG. 11 is a flowchart illustrating a method for recording content according to an embodiment of the present disclosure.

The processor 170 may receive an input of a channel number change command through the user input unit 150 (S1101).

The channel number change command may include an up/down command of a channel number or a direct channel number change command.

The processor 170 may determine whether the current channel is being recorded (S1102). For example, when the content currently being played is a broadcast image received through a tuner 131 or an IP channel, and digital video recording (DVR) is being recorded, channel change may be limited. Accordingly, the processor 170 may determine whether the content currently being reproduced is being recorded.

When the current channel is being recorded, the processor 170 may acquire URL information of the changed channel number from the integral channel map information.

The processor 170 may display web content provided by a change channel number, through the display unit 180 based on the URL information of the change channel number (S1103).

When the current channel is not being recorded, the processor 170 may control the channel change according to the channel number change command (S1104).

FIG. 12 is a flowchart illustrating a method of changing a channel number according to an embodiment of the present disclosure.

The processor 170 may acquire channel information adjacent to the channel, which currently plays content, from the integral channel map information (S1201).

For example, the processor 170 may acquire a channel number which is changed, when a channel up or down change command is input from a channel number related to content, which is currently playing, as adjacent channel information.

The processor 170 may acquire URL information of an adjacent channel (S1202).

The processor 170 may acquire URL information of the adjacent channel from the integral channel map information, based on the acquired adjacent channel information.

The processor 170 may receive and store web content provided by adjacent channels based on the acquired URL information (S1203).

The processor 170 may store web content, which is provided by the adjacent channel, in the memory 140 in a specific period of time.

In addition, the processor 170 may store web streaming content in the memory 140, when the web streaming content is included in web content provided by the adjacent channel is included.

The processor 170 may receive a channel number change command through an adjacent channel through the user input unit 150 (S1204).

The processor 170 may display the web content of the adjacent channel stored in the memory 140 through the display unit 180 in response to the channel number change command (S1205).

For example, the processor 170 may control to change the channel number in response to the channel number change command, and may display web streaming content provided from the changed channel number through the display unit 180.

Accordingly, the display device 100 may change the channel, while reducing the time for loading the web content.

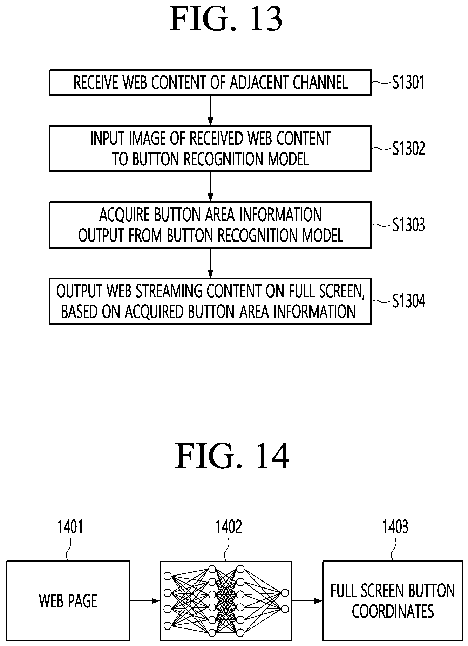

FIG. 13 is a flowchart illustrating a method of outputting web streaming content on a full screen according to an embodiment of the present disclosure.

The processor 170 may receive web content, based on URL information of the adjacent channel (S1301).

The processor 170 may input an image 1401 of the received web content to a button recognition model 1402 (S1302). The image of the web content may include an image of a web page. In addition, web streaming content may be provided on the web page.

FIG. 14 is a view illustrating a button recognizing model according to an embodiment of the present disclosure.

The button recognition model 1402 may be an artificial neural network model trained to output an area of a full screen button for switching web streaming content from an image of a specific web page, on a full screen.

The button recognition model 1402 may be an artificial neural network (ANN) model used in machine learning. The button recognition model 1402 may include artificial neurons (nodes) which form a network by combining synapses. The button recognition model may be defined by a connection pattern between neurons in different layers, a learning process to update a model parameter, and an activation function to generate an output value.

The button recognition model 1402 may include an input layer, an output layer, and may selectively include at least one hidden layer. Each layer may include at least one neuron, and the artificial neural network may include a synapse connecting a neuron and a neuron. In an artificial neural network, each neuron may output a function value of an active function for input signals input through the synapse, a weight, and a bias.

The button recognition model 1402 may be generated through supervised learning, unsupervised learning, or reinforcement learning, depending on a learning method.

For example, when the button recognition model 1402 is generated through supervised learning, the button recognition model 1402 may be trained in the state that a label for the learning data is given. The label may refer to an answer (or a result value) that the artificial neural network should infer, when the learning data is input to the artificial neural network. For example, an area of a full screen button may be labelled and specified to switch the web streaming content in the specific web page image on the full screen. Accordingly, the button recognition model 1402 may be an artificial neural network model trained to label a full screen button area corresponding to a specific web page image and to output a full screen button area from a specific image.

The button recognition model 1402 may be an artificial neural network model previously stored in the memory 140 and trained.

The processor 170 may acquire button area information output from the button recognition model 1402 (S1303).

The processor 170 may output the web streaming content provided from the web content on the full screen, based on the acquired button area information (S1304).

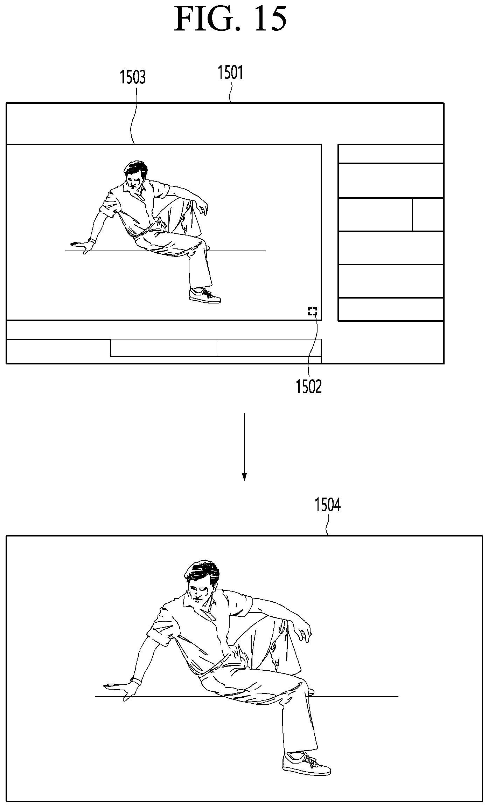

FIG. 15 is a view illustrating that web streaming content is output on a full screen according to an embodiment of the present disclosure.

Web content 1501 may include web streaming content 1503. The web content 1501 may include an object of a button 1502 for switching the web streaming content 1503 on the full screen.

The processor 170 may input an image of the web content 1501 to the button recognition model 1402.

The processor 170 may output the web streaming content 1503 on a full screen 1504, based on a button area output from the button recognition model 1402.

Meanwhile, the processor 170 may receive web content based on URL information of an adjacent channel through the wireless communication unit 143. The web content may include a web page source code. The web page source code may include a JavaScript code responsible for the operation of the web page.

In addition, the processor 170 may extract a source code for a full screen button for switching web streaming content on a full screen and a source code for the coordinates of the full screen button, from the received web page source code. For example, the processor 170 may extract a code related to a full screen button for switching on a full screen, from a JavaScript code included in a web page source code. In addition, the processor 170 may extract a code related to the coordinates of the full screen button from the JavaScript code included in the web page source code.

In addition, the processor 170 may generate an event for inputting a full screen switching button in the web content, based on the extracted source code for a full screen button and the extracted source code for the coordinates of the full screen button.

For example, when the processor 170 receives a full screen switching command from the remote control device 200 through the user input unit 150, the processor 170 may generate an event for inputting the full screen switching button to the web content, based on the extracted source code for the full screen button and the extracted source code of the coordinates of the full screen button.

Accordingly, even when the coordinates of the full screen button are not selected in the remote control device 200, the processor 170 may process the full screen switching command.

Hereinabove, although the disclosure has been described with reference to exemplary embodiments and the accompanying drawings, the disclosure is not limited thereto, but may be variously modified and altered by those skilled in the art to which the disclosure pertains without departing from the spirit and scope of the disclosure claimed in the following claims.

Therefore, the exemplary embodiments of the present disclosure are provided to explain the spirit and scope of the present disclosure, but not to limit them, so that the spirit and scope of the present disclosure is not limited by the embodiments.

The scope of the present disclosure should be construed on the basis of the accompanying claims, and all the technical ideas within the scope equivalent to the claims should be included in the scope of the present disclosure.

## Claims

1. A display device comprising:
a communication interface configured to receive Electronic Program Guide (EPG) channel map information including information on a plurality of channel numbers and including information on a content provider corresponding to the plurality of channel numbers, and to receive information on a Uniform Resource Locator (URL) serving as a web-content providing address of each of the plurality of channel numbers, which is included in the EPG channel map information; and
a processor configured to:
acquire Internet protocol (IP) cannel information indicating a media content providing address of each of the plurality of channel numbers;
generate integral channel map information including integral channel information by generating the integral channel information, depending on whether an IP channel is present for each of the plurality of channel numbers, based on the EPG channel map information, the URL information, and the IP channel information;
receive an input of a specific channel number through a user input unit; and
output, through a display unit, media content or web content provided with respect to the specific channel number.

2. The display device of claim 1, wherein the processor is configured to:
determine whether a present channel includes URL information, based on the integral channel map information, when the present channel outputs media content provided through the IP channel; and
output, through the display unit, a switching button for outputting web content of the channel, when the present channel includes URL information,

3. The display device of claim 1, wherein the processor is configured to:
receive a content search command through a user input unit;
output, through the display unit, at least one content which is found in response to the content search command;
acquire, from the integral channel information, URL information corresponding to a channel of a content provider of the found content; and
output a channel switching button for outputting web content of the channel of the content provider of the found content.

4. The display device of claim 1, wherein the processor is configured to:
output, through the display unit, a plurality of contents to a plurality of divided screens, respectively;
output media content of a first content provider, which is provided through the IP channel, on a first divided screen of the plurality of divided screens; and
output web content of a second content provider on a second divided screen of the plurality of divided screens.

5. The display device of claim 4, wherein the processor is configured to:
output a simultaneous viewing button for controlling to output second media content, which is provided by the second content provider on the first divided screen, through the display unit

6. The display device of claim 1, wherein the processor is configured to:
receive an input of a channel number change command through the user input unit;
determine wherein a present channel is being recorded;
acquire URL information of a channel number, which is to be changed, from the integral channel map information, when the present channel is being recorded; and
output, to the display unit, web content provided through the channel number to be changed, based on the URL information of the channel number to be changed.

7. The display device of claim 1, wherein the processor is configured to:
acquire information on a channel adjacent to a present channel, from the integral channel map information;
acquire URL information of the adjacent channel from the integral channel map information, based on the information on the adjacent channel;
store, a memory, web content provided by the adjacent channel by receiving the web content provided by the adjacent channel based on the acquired URL information through the communication interface;
receive a command for changing a channel number to the adjacent channel through the user input unit; and
output, through the display unit, the web content of the adjacent channel, which is stored in the memory, in response to the channel number change command.

8. The display device of claim 7, wherein the processor is configured to:
input an image of the web content of the adjacent channel to a button recognition model;
acquire button area information output from the button recognition model; and
output web streaming content, which is provide in the web content, on a full screen, based on the button area information.

9. A method for providing content performed by a display device, the method comprising:
receiving Electronic Program Guide (EPG) channel map information including information on a plurality of channel numbers and including information on a content provider corresponding to the plurality of channel numbers;
receiving information on a Uniform Resource Locator (URL) serving as a web-content providing address of each of the plurality of channel numbers, which is included in the EPG channel map information;
acquiring Internet protocol (IP) cannel information indicating a media content providing address of each of the plurality of channel numbers;
generating integral channel map information including integral channel information by generating the integral channel information, depending on whether an IP channel is present for each of the plurality of channel numbers, based on the EPG channel map information, the URL information, and the IP channel information,
receiving a specific channel number through a user input unit; and
outputting, through a display unit, media content or web content provided with respect to the specific channel number

10. The method of claim 9, further comprising:
determining whether a present channel includes URL information, based on the integral channel map information, when the present channel outputs media content provided through the IP channel; and
outputting a switching button for outputting web content of the channel, when the present channel includes URL information.

11. The method of claim 9, further comprising:
determining whether a present channel includes URL information, based on the integral channel map information, when the present channel outputs media content provided through the IP channel; and
outputting a switching button for outputting web content of the channel, when the present channel includes URL information.

12. The method of claim 9, wherein the outputting of the media content or the web content includes:
outputting media content of a first content provider, which is provided through the IP channel, on a first divided screen of the plurality of divided screens;
outputting web content of a second content provider on a second divided screen of the plurality of divided screens; and
outputting, on the second divided screen, a simultaneous viewing button to output second media content, which is provided by the second content provider on the first divided screen.

13. The method of claim 9, further comprising:
receiving an input of a channel number change command;
determining wherein a present channel is being recorded;
acquiring URL information of a channel number, which is to be changed, from the integral channel map information, when the present channel is being recorded and
outputting web content provided through the channel number to be changed, based on the URL information of the channel number to be changed.

14. The method of claim 9, further comprising:
acquiring information on a channel adjacent to a present channel, from the integral channel map information;
acquiring URL information of the adjacent channel from the integral channel map information, based on the information on the adjacent channel;
storing web content provided by the adjacent channel by receiving the web content provided by the adjacent channel based on the acquired URL information;
receiving a command for changing a channel number to the adjacent channel; and
outputting the web content of the adjacent channel, which is stored, in response to the channel number change command.

15. The method of claim 14, wherein the outputting of the web content of the adjacent channel, which is stored, includes:
inputting an image of the web content of the adjacent channel to a button recognition model;
acquiring button area information output from the button recognition model; and
outputting web streaming content, which is provide in the web content, on a full screen, based on the button area information.
